# EUROPEAN PATENT APPLICATION

(11) **EP 4 616 826 A1**
(43) Date of publication of application: **17.09.2025**
(21) Application number: 23889099.0
(22) Date of filing: 07.11.2023
(51) Int. Cl.: A61C 8/00, A61C 9/00, A61B 5/00, A61B 18/20

(54) **IMPLANT SCAN BODY SET FOR IMPROVING ACCURACY OF INTRAORAL SCANNING**

(30) Priority: 08.11.2022 KR 20220147583
(71) Applicant: ODS Co., Ltd, Incheon 21990 (KR)
(72) Inventor: PARK, Junbeum, Incheon 21986 (KR); SIM, Miyoung, Incheon 21986 (KR); PARK, Sungwon, Incheon 21986 (KR)
(74) Representative: Valet Patent Services Limited
(86) International application number: PCT/KR2023/017723
(87) International publication number: WO 2024/101839

(57) **Abstract**

The implant scan body set for improving the accuracy of oral scanning according to the present invention comprises a base part that engages with an implant fixture, a body part connected to the base part in an upward direction, and a head part (10) connected to the body part, which constitutes a characteristic part of the scanning. The scan body used in the incisor region has a head part (10) consisting of a first cap and a base part, the scan body used in the canine region has a head part (10) consisting of a second cap (200) and the base part, the scan body used in the premolar region has a head part (10) consisting of a third cap (300) and the base part, and the scan body used in the molar region has a head part (10) consisting of a fourth cap (400) and the base part.

## Description

### Technical Fields

The present invention relates to scan bodies for dental implants, and more particularly, to a scan body designed to improve accuracy and convenience when scanning multiple scan bodies simultaneously.

### Background technology

When natural teeth can no longer be used, dental implant treatment-removing the tooth and placing an artificial tooth in its place-has become a widely accepted practice. This implant procedure involves embedding a fixture into the jawbone, attaching an abutment to the fixture, and finally affixing a prosthesis (tooth-like structure) to the top of the abutment to complete the artificial tooth.

Recently, implant procedures have evolved from traditional analog methods (such as manual impressions) to digital methods that utilize intraoral scanning via scanners. These digital workflows enable quicker and more accurate treatments.

In digital implant procedures, accurately identifying the location, depth, and angulation of the fixture is critical, and scan bodies are used to obtain such data. That is, after a scan body is attached to the fixture, intraoral scanning is performed. The scan body is a tool that displays the position of the fixture (which serves as the artificial root) on a computer screen via the implant/scan body library during the CAD process of prosthesis design.

When the intraoral scan data is sent from a dental clinic to a dental lab, the lab displays this digital data in a 3D format and uses it to fabricate the patient's prosthesis.

This CAD system based on scanning is computer-driven, which significantly improves accuracy compared to traditional manual methods and simplifies the procedure, reducing the number of patient visits. As a result, the adoption of digital implant methods is rapidly increasing.

However, conventional scan bodies used in dental clinics do not differ in shape according to the position of each tooth. Consequently, when multiple scan bodies are attached for the placement of multiple implants and scanned simultaneously, scanning errors occur. This necessitates scanning one tooth at a time, which is inconvenient for practitioners.

### Detailed description of the invention

### Technical challenges

The scan body set according to the present invention aims to enable accurate image data generation and storage, even when scan bodies are simultaneously attached to and scanned from multiple teeth during multi-implant procedures.

Ultimately, this scan body set provides a more accurate and faster digital implant procedure while minimizing patient inconvenience by reducing the number of visits.

### Technical Solution

The scan body set according to the present invention has been devised to solve the aforementioned technical problems.

It is used in the incisor region and comprises a head portion (10) consisting of a first cap and a base. The first cap is composed of an inclined surface connected to the top of the base, a lateral surface extending from the inclined surface, a circumferential surface connected to both the inclined and lateral surfaces, and a horizontal top surface connected to the upper ends of the circumferential and lateral surfaces.

A first recognition groove (11), having a predetermined depth and a kidney-bean shape, is formed on the top surface. A second recognition groove (12), formed in a slot shape and positioned at a spaced distance from the first recognition groove (11), is arranged in parallel or optionally relative to the first recognition groove (11).

The scan body set according to the present invention is intended for use in the canine region. The head portion (10) consists of a second cap (200) and the base. The second cap (200) is connected and secured to the top surface of the base and comprises: a lower portion (204) having the shape of a disk with a smaller diameter than that of the base and a predetermined height, and an upper portion (202) connected and secured to the upper surface of the lower portion (204), having an overall conical shape.

A first recognition groove (11), having a predetermined depth and a kidney-bean shape, is formed on the top surface of the upper portion (202).

The scan body set according to the present invention is intended for use in the premolar region. The head portion (10) consists of a third cap (300) and a base. The third cap (300) has an overall truncated conical shape with a horizontally cut top surface, and its bottom diameter is smaller than that of the base. It is connected and secured to the top surface of the base.

One or two first recognition grooves (11), each having a predetermined depth and a kidney-bean shape, are formed on the top surface of the third cap (300), with the two grooves, if present, facing each other at a predetermined distance.

The scan body set according to the present invention is intended for use in the molar region. The head portion (10) consists of a fourth cap (400) and the base. The fourth cap (400) has an overall truncated conical shape with a horizontally cut top surface, and its bottom diameter matches that of the base. It is connected and securely seated on the top surface of the base.

On the top surface of the fourth cap (400), one first recognition groove (11) or two grooves facing each other at a predetermined distance, or alternatively, three grooves arranged in three directions, are formed.

### Effects of the Invention

The scan body of the present invention allows for the simultaneous mounting of multiple scan bodies in the oral cavity-even when implants are placed in adjacent or nearby positions-by giving each scan body a distinct shape according to its position. This enables capturing all fixture data in a single scan, significantly improving procedural convenience and reducing unnecessary costs, thus enabling a more economical treatment.

Furthermore, the reduced number of patient visits greatly enhances convenience from the patient's perspective.

### Brief Description of the Drawings

Fig.1 is a tooth numbering system for human dentition.
Fig.2 is a general shape of a scan body used in implant scanning.
Fig.3 is a perspective view of the head portion (10) for the incisor scan body.
Fig.4 is a perspective view of the head portion (10) for the canine scan body.
Fig.5 is a perspective view of the head portion for the premolar scan body.
Fig.6 is a perspective view of the head portion (10) for the molar scan body.

### Best Mode for Carrying Out the Invention

The scan body set according to the present invention comprises:
A head portion (10) made up of a first cap and a base.

The first cap is connected to the top of the base and comprises an inclined surface, a side surface, a circumferential surface connecting both, and a horizontal top surface.

A bean-shaped first recognition groove (11) of predetermined depth is formed on the top surface, and a slot-shaped second recognition groove (12) is optionally and/or in parallel formed at a spaced distance from the first recognition groove (11).

### Form for implementing the Invention

The scan body set according to the present invention will now be described in detail below.

The technical terms used in the present invention are intended solely to explain the embodiments described hereinafter and are not intended to limit the scope of the present invention through the use of such terms. Unless otherwise specifically defined, the technical terms should be understood as conveying meanings that are generally recognized and commonly used by those skilled in the art.

Before providing a detailed description of the present invention, the unique identification numbers of human teeth will first be explained for clarity.

Fundamentally, human teeth are categorized into:
- Incisors (located at the front, consisting of a central incisor and a lateral incisor),
- Canines (pointed teeth),
- Premolars (divided into first and second premolars, with two in total), and
- Molars (commonly referred to as back teeth, divided into first, second, and third molars, with three in total).

Each of the upper and lower jaws contains 16 teeth, arranged symmetrically with 8 teeth on each side.

The technical feature of the present invention lies in producing a scan body set in which the shape of the scan body varies for each tooth. This allows for multiple scan bodies to be mounted and scanned simultaneously in cases where implants are to be placed in multiple teeth.

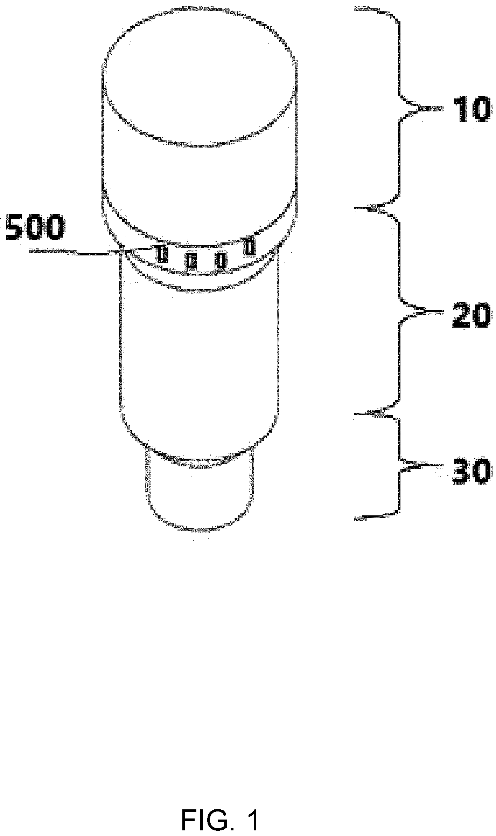

**FIG. 1** illustrates the unique numbering assigned to the human teeth.

In order to enhance the understanding of the present invention, unique numbers will be assigned to the teeth within the oral cavity, as shown in FIG. 1.

For the right upper jaw, numbers from 11 to 18 will be assigned in order from the incisors to the molars. For the left upper jaw, numbers from 21 to 28 will be assigned in order from the incisors to the molars.

Next, for the left lower jaw, numbers from 31 to 38 will be assigned in order from the incisors to the molars. For the right lower jaw, numbers from 41 to 48 will be assigned in order from the incisors to the molars.

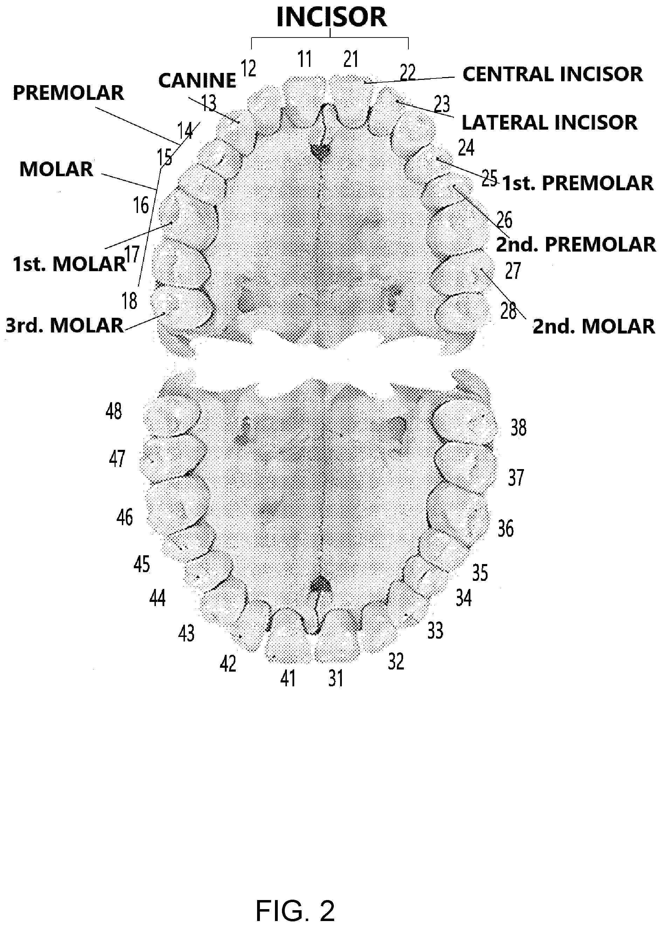

**FIG. 2** illustrates the general shape of a scan body used for scanning implants. The scan body according to the present invention is primarily composed of a base portion (30), a body portion (20), and a head portion (10).

The base portion (30) is configured to be coupled with the implant fixture, the body portion (20) is connected upward from the base portion (30), and the head portion (10) is connected upward from the body portion (20) and represents the characteristic (differentiating) part of the scanning process.

In other words, the base portion (30) serves to fix the scan body to the fixture, while the head portion (10) is the most important part during scanning, and it constitutes the core part of the scan data. The scanner recognizes differences in the shape of the head portion (10) of the scan body to distinguish between different scan bodies. The head portion (10) consists of a supporting portion (110, 210, 310, 410) at the bottom and a cap (100, 200, 300, 400) connected to its top.

Hereafter, the scan body according to the present invention will be described in detail, focusing mainly on the head portion. The head portion is fundamentally composed of a cap and a supporting portion. In the perspective view of the head portion in the drawings, recognition grooves on the upper surface are not shown for convenience. Instead, the plan view of the upper surface of the head portion is separately shown below the perspective view, where the recognition grooves are depicted. In other words, the head portion of the scan body in the present invention always has recognition grooves formed on its upper surface in some shape or form.

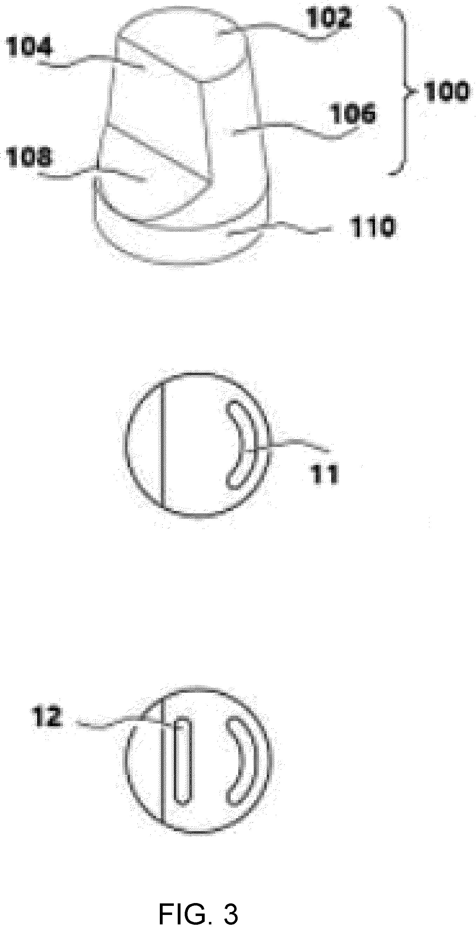

**FIG. 3** shows a perspective view of the scan body used for the incisor area.

The scan body used for the incisor area (11, 12, 21, 22, 31, 32, 41, 42) consists of a head portion (10) made up of a first cap (100) and a supporting portion (110).

The first cap (100) includes a slanted surface (108) connected to the top of the supporting portion (110), a side surface (104) extending from the slanted surface (108), a circumferential surface (106) connecting both the slanted surface (108) and the side surface (104), and a horizontal top surface (102) that extends from the upper side of the side surface (104) and circumferential surface (106). The first cap (100) generally has a conical shape with the top of the cone cut off horizontally, and one side of the side surface is partially cut off. This cut-off portion includes the side surface (104) and the slanted surface (108).

The first recognition groove (11) is a groove on the top surface that has a certain depth and is shaped like a kidney bean. The second recognition groove (12) is positioned at a certain distance from the first recognition groove (11) and is formed in a slot shape with a certain depth. The shapes of the first recognition groove (11) and the second recognition groove (12) are merely examples, and they can be modified and altered into various shapes such as circular, elliptical, rectangular, etc. The first recognition groove (11) and the second recognition groove (12) may be formed separately or simultaneously on the top surface of the first cap. The unique shape of the overall grooves increases the accuracy of the scan due to their distinct form.

For example, when only one scan body is used for scanning the incisor area, the scan body with only the first recognition groove (11) is used. When two scan bodies need to be used simultaneously for the incisor area, one scan body with only the first recognition groove (11) and another with both the first recognition groove (11) and the second recognition groove (12) formed together can be used. This allows the scanner to recognize the adjacent scan bodies as separate, thereby generating accurate scan data.

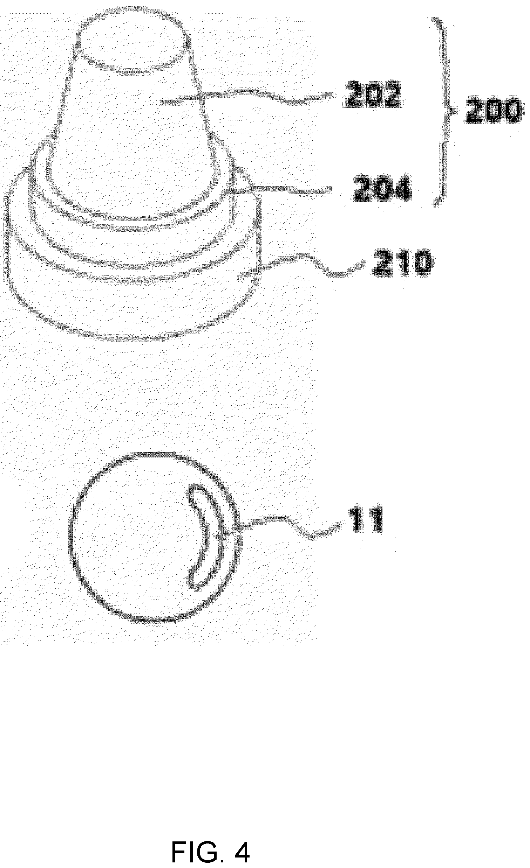

**FIG. 4** shows a perspective view of the scan body for the canine region.

The scan body used for the canine region (13, 23, 33, 43) consists of a head portion (10) made up of a second cap (200) and a supporting portion (210).

The second cap (200) is connected to the upper surface of the supporting portion (210) and seated, and consists of an upper portion (202) and a lower portion (204). The lower portion (204) is shaped like a disc with a smaller diameter than the supporting portion and has a certain height. The upper portion (202) is connected to the top of the lower portion (204) and seated, having a conical shape with the tip cut off.

The horizontal cross-sectional shape of the upper portion (202) and lower portion (204) is depicted as circular, but this is only one embodiment. Therefore, the cross-sectional shape can be modified into various polygons such as triangle, square, pentagon, etc., and these modified embodiments would also fall within the technical scope of the present invention.

On the upper surface of the upper portion (202), a first recognition groove (11) is formed, which has a certain depth and is shaped like a kidney bean, similar to the scan body used in the incisor region.

The scan body used for the canine region has a unique shape in its head portion (10), distinguishing it from the scan body used in the incisor region, which improves scanning accuracy. For this reason, even when scan bodies are used simultaneously for both the incisor and canine regions, it is possible to attach and scan both scan bodies at the same time without the need for separate scans.

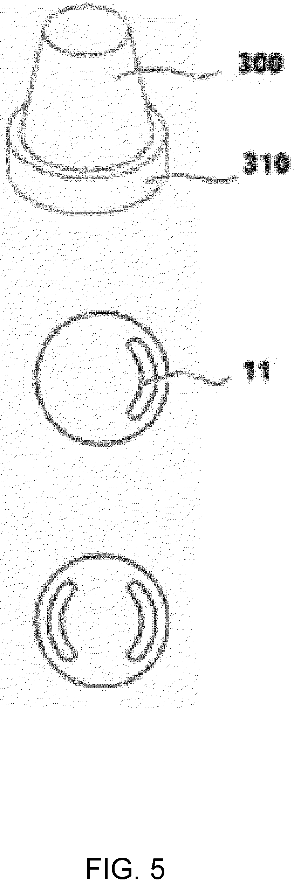

**FIG. 5** shows a perspective view of the scan body for the premolar region.

The scan body used for the premolar region (14, 15, 24, 25, 34, 35, 44, 45) consists of a head portion (10) made up of a third cap (300) and a supporting portion (310). The third cap (300) has a conical shape with the top horizontally cut off, and the diameter of the bottom is smaller than the diameter of the supporting portion (310). It is connected and seated on the top surface of the supporting portion (310). While the third cap (300) is depicted in a conical shape, this is also only one embodiment, and it can be modified into various three-dimensional shapes such as triangular prisms, rectangular prisms, pentagonal prisms, etc.

On the top surface of the third cap (300), a first recognition groove (11), shaped like a kidney bean and with a certain depth, may be formed. Alternatively, two first recognition grooves (11) may be formed with a certain distance apart and facing each other.

This is used to distinguish between two scan bodies when scanning two adjacent premolars simultaneously, allowing the scanning of both premolars in one operation.

The shape of the first recognition groove (11) shown is only one example, and it can be modified into other shapes such as circular, elliptical, or rectangular, as previously described.

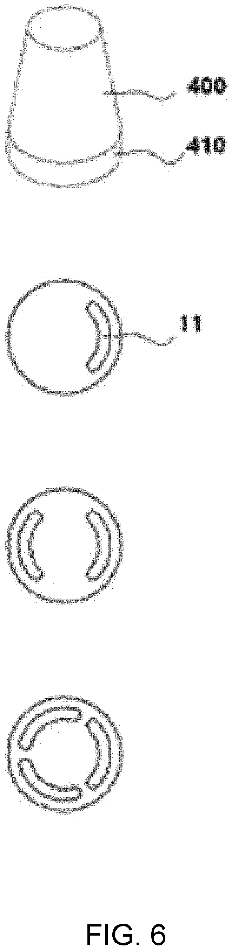

**FIG. 6** shows a perspective view of the scan body for the molar region.

The scan body used for the molar region (16, 17, 18, 26, 27, 28, 36, 37, 38, 46, 47, 48) consists of a head portion (10) made up of a fourth cap (400) and a supporting portion (410).

The fourth cap (400) has a conical shape with the top horizontally cut off. The diameter of the bottom of the fourth cap (400) is the same as the diameter of the supporting portion (410), and it is connected and seated on the top surface of the supporting portion (410). In other words, the fourth cap (400) differs from the third cap (300) in that the diameter of the bottom matches the diameter of the supporting portion (410), and the shape is a conical column.

As shown in FIG. 1, there are three molars. Therefore, three different types of scan bodies are required for the molars, each having a unique shape.

The three types of scan bodies used for the molars may consist of a scan body (A Type) with one first recognition groove (11) on the top of the fourth cap (400), a scan body (B Type) with two first recognition grooves (11) facing each other with a certain distance, and a scan body (C Type) with three first recognition grooves (11) formed in three directions.

The three types of scan bodies used for the molars may also include additional features to improve scanning accuracy, such as a horizontally formed groove (annular groove) or a vertically formed groove (longitudinal groove) on the sides of the fourth cap (400).

As described above, the scan body set according to the present invention allows multiple scan bodies with unique shapes to be combined and scanned in one operation, making it possible to acquire fixture data from multiple implants at once. Furthermore, the scan body set according to the present invention distinguishes between scan bodies located in different regions (upper jaw, lower jaw, left, right) by their unique shapes.

For example, on the scan body used for the right upper jaw (teeth numbered 11 to 18), a vertical rectangular groove (500) is formed on the side of the supporting portion, as shown in FIG. 1. On the scan body used for the left upper jaw (teeth numbered 21 to 28), two vertical rectangular grooves (500) are formed on the side of the supporting portion with a certain distance apart.

Additionally, on the scan body used for the left lower jaw (teeth numbered 31 to 38), three vertical rectangular grooves (500) are formed on the side of the supporting portion, and on the scan body used for the right lower jaw (teeth numbered 41 to 48), four vertical rectangular grooves (500) are formed. This is one embodiment of the present invention.

By forming vertical rectangular grooves (500) with different numbers on the sides of the supporting portions, it becomes easy to distinguish which part of the mouth the scan body is used for. These rectangular grooves (500) may also be coated in a non-metallic color (such as red, blue, etc.) to make it easier for the practitioner to distinguish them and to potentially contribute to the accuracy of the scanning process.

The rectangular grooves (500) described here are one embodiment, and as long as the grooves are detectable by the scanner, they may be modified into circular grooves, square grooves, or other polygonal grooves. Such modified embodiments would still fall within the scope of the present invention.

Furthermore, instead of being recessed, the grooves could also be formed as convex raised grooves, and such embodiments would also fall within the scope of the present invention.

The description of the configuration and effects above is one embodiment of the present invention and does not limit the scope of the claims. Various changes and modifications are possible within the scope of the invention as long as they do not alter the fundamental technical idea, and such simple design changes will be considered within the technical scope of the present invention.

### Industrial Applicability

The scan body set according to the present invention not only improves the convenience of the procedure but also reduces unnecessary costs, making the procedure more economical.

Furthermore, the present invention helps reduce the number of hospital visits for the patient, providing convenience to the patient as well.

## Claims

1. A set of scan bodies comprising a base part that engages with an implant fixture, a body part connected to the base part in an upward direction, and a head part connected to the body part in an upward direction, which constitutes a characteristic part of scanning, wherein:
For use in the incisor region, the head part (10) consists of a first cap and a base part, the first cap includes an inclined surface connected to the upper side of the base part, a side surface extending from the inclined surface, a peripheral surface connected to both the inclined surface and side surface, and a horizontal upper surface extending from the top of the side surface and peripheral surface, a first recognition groove (11) having a certain depth and an overall kidney shape is formed on the upper surface, and a second recognition groove (12) having a certain depth and formed as a slot, parallel to or optionally spaced from the first recognition groove (11) is formed at a distance from the first recognition groove (11) on the upper surface of the scan body,
For use in the canine region, the head part (10) consists of a second cap (200) and the base part, the second cap (200) is connected to and seated on the upper side of the base part, comprising a lower part (204) shaped as a disc with a smaller diameter and a certain height, and an upper part (202) connected and seated on the upper side of the lower part (204), having a conical shape, a first recognition groove (11) having a certain depth and an overall kidney shape is formed on the upper surface of the upper part (202) of the head part,
For use in the premolar region, the head part (10) consists of a third cap (300) and the base part, the third cap (300) is generally a conical shape with a horizontally cut top, where the diameter of the lower part is smaller than the diameter of the base part and is connected and seated on the upper side of the base part, a first recognition groove (11) having a certain depth and an overall kidney shape is formed on the upper surface of the third cap (300), and either one or two first recognition grooves (11) are formed at a certain distance from each other,
For use in the molar region, the head part (10) consists of a fourth cap (400) and the base part, the fourth cap (400) is a conical shape with a horizontally cut top, and the diameter of the lower part is equal to the diameter of the base part, and is connected and seated on the upper side of the base part, the fourth cap (400) includes one first recognition groove (11), or two first recognition grooves (11) formed at a certain distance from each other, or three first recognition grooves (11) formed in three directions on the upper surface of the cap,
A set of implant scan bodies for improving the accuracy of oral scanning.

2. The scan body set of claim 1, wherein:
The scan body used in the incisor region, when the first recognition groove (11) is formed as one groove, is used for the 11th, 21st, 31st, and 41st incisor regions,
The scan body used in the incisor region, when the first recognition groove (11) and the second recognition groove (12) are formed at a certain distance, is used for the 12th, 22nd, 32nd, and 42nd incisor regions, for improving the accuracy of oral scanning.

3. The scan body set of claim 1, wherein:
The scan body used in the premolar region, when the first recognition groove (11) is formed as one groove, is used for the 14th, 24th, 34th, and 44th premolar regions,
The scan body used in the premolar region, when the first recognition groove (11) is formed as two grooves facing each other at a certain distance, is used for the 15th, 25th, 35th, and 45th premolar regions, for improving the accuracy of oral scanning.

4. The scan body set of claim 1, wherein:
The scan body used in the molar region, when the first recognition groove (11) is formed as one groove, is used for the 16th, 26th, 36th, and 46th molar regions,
The scan body used in the molar region, when the first recognition groove (11) is formed as two grooves facing each other at a certain distance, is used for the 17th, 27th, 37th, and 47th molar regions,
The scan body used in the molar region, when the first recognition groove (11) is formed as three grooves in three directions, is used for the 18th, 28th, 38th, and 48th molar regions, for improving the accuracy of oral scanning.
